# EUROPEAN PATENT SPECIFICATION

(11) **EP 0 634 243 B1**
(45) Date of publication and mention of the grant of the patent: **04.06.1997**
(21) Application number: 94110762.5
(22) Date of filing: 11.07.1994
(51) Int. Cl.: B23H 1/04, B23H 9/14

(54) **Electrode tube for electrical discharge machining and manufacturing method thereof**
Rohrelektrode für Funkenerosionsbearbeitung und Verfahren zur Herstellung derselben
Electrode en forme de tube pour usinage par électroérosion et procédé de fabrication de cette électrode

(30) Priority: 14.07.1993 JP 196902/93
(43) Date of publication of application: 18.01.1995
(73) Proprietor: SUMITOMO ELECTRIC INDUSTRIES, LIMITED, Osaka 541 (JP)
(72) Inventor: Ezaki, Shigeo, Osaka Works of, Konohana-ku, Osaka (JP); Isejima, Tsuyoshi, c/o Kansai Pipe Ind., Ltd., Osaka (JP); Harada, Kazutoshi, c/o Kansai Pipe Ind., Ltd., Osaka (JP)
(74) Representative: Herrmann-Trentepohl, Werner, Dipl.-Ing.

(56) References cited:
- CH-A- 538 887
- US-A- 3 622 734
- PATENT ABSTRACTS OF JAPAN vol. 8 no. 9 (M-268) (1446) ,14 January 1984 & JP-A-58 171219 (TANAKA KIKINZOKU) 7 October 1983,
- PATENT ABSTRACTS OF JAPAN vol. 6 no. 246 (M-176) (1124) ,4 December 1982 & JP-A-57 144630 (TANAKA KIKINZOKU KOGYO) 7 September 1982,

## Description

### BACKGROUND OF THE INVENTION

### Field of the Invention

The present invention relates generally to electrode tubes for electrical discharge machining and manufacturing methods thereof, and more specifically, to improvements in an electrode tube for electrical discharge machining having substantially a plurality of through holes and a method of manufacturing such an electron tube. Description of the Related Art

When small holes are formed in a metal or alloy workpiece by means of electrical discharge machining, an electrode is used which is formed of a copper tube having an outer diameter for example in the range from 0.3 to 3.0mm. A working fluid for cooling is passed through through holes of the electrode tube, electrical discharge is caused between the electrode tube and the workpiece while turning the electrode tube, and the workpiece is thus perforated.

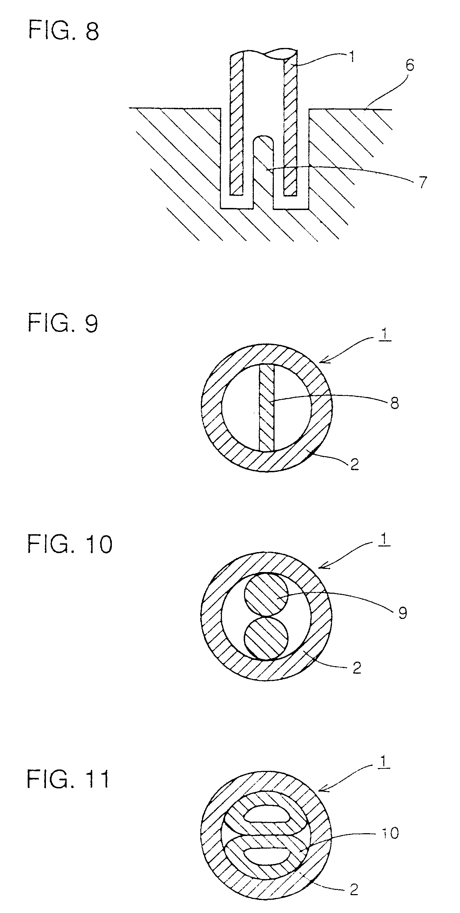

However, as illustrated in a cross section in Fig. 8, an undesired core 7 forms inside electrode tube 1 during electrical discharge machining of workpiece 6. Core 7 lowers the precision of electrical discharge machining, impedes smooth electrical discharge machining operation and lowers working efficiency as a result.

In order to solve such a problem, electrode tubes shown in Figs. 9 to 11 have been suggested (see Japanese Patent Laying-Open No. 63-11239).

Electrode tube 1 in Fig. 9 includes a cylindrical metal tube 2 and a metal partition 8 inserted in cylindrical portion 2.

Electrode tube 1 illustrated in Fig 10 includes cylindrical metal tube 2 and two metal rods 9 inserted in cylindrical portion 2.

Electrode tube 1 shown in Fig. 11 includes a cylindrical metal tube 2 and two inner metal tubes 10 inserted in cylindrical portion 2.

In electrode tubes 1 shown in Figs. 9 to 11, the space in cylindrical portion 2 is divided into a plurality of through holes. Therefore, if electrical discharge machining is conducted while turning electrode 1, an undesired core does not form in electrode tube 1.

In the manufacture of electrode tubes as illustrated in Figs. 9 to 11, a partitioning plate, thin rods, or inner tubes are inserted in tube 2 and then drawing working must be conducted. A tube material wound in a long coil cannot be used if such a partitioning plate, thin rods or thin inner tubes are inserted in tube 2.

Tube material 2 to which the partitioning plate, thin rods or thin inner tubes are inserted must be relatively short and straight. Therefore, the electrode tubes as shown in Figs. 9 to 11 cannot be continuously produced from long tube material 2 wound in a coil for example, and working efficiency cannot be improved.

The document JP-A 58 171219 discloses an electrode for electric discharge machining comprising a shape having circular-arclike protruding parts which are in the same direction and in equiangular and three way directions, and a plurality of bending surfaces through the circular-arclike protruding parts on the external circumference.

JP-A-57-144630 teaches an electrode with a circular outer shape for discharge working which electrode has two through holes for supplying working oil.

The document CH-A 538 887 discloses electrodes consisting of several parts having a circular outer shape but very complicated parts within the outer circular cover.

### SUMMARY OF THE INVENTION

In view of the foregoing problems associated with the related art as described above, it is an object of the invention to provide an electrode tube which has no undesired core formed therein during electrical discharge machining and can be continuously formed from a long coiled tube material, and a manufacturing method thereof.

An electrode tube for electrical discharge machining according to one aspect of the invention includes an outer peripheral portion and a plurality of rail like portions projecting from the outer peripheral portion toward the central axis of the tube, these rail like portions are formed integrally with the outer peripheral portion, and the space in the tube is substantially divided into a plurality of through holes along the central axis by the plurality of rail like portions.

A method of manufacturing an electrode tube for electrical discharge machining according to another aspect of the invention includes the steps of forming a shape tube by means of one working method selected from the group consisting of hot extrusion, cold rolling and drawing, and subjecting the shape tube to drawing a plurality of times through dice having a normal circular hole, and thus produced is an electrode tube having a plurality of through holes substantially divided by a plurality of rail like portions projecting from the outer peripheral portion toward the central axis in a cross section taken perpendicularly to the central axis.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a cross sectional view showing a metal tube material for an electrode tube according to one embodiment of the invention;
Fig. 2 is a cross sectional view showing an electrode tube produced by drawing the tube material in Fig. 1 through dice;
Fig. 3 is a cross sectional view showing an electrode tube according to another embodiment similar to Fig. 2;
Fig. 4 is a cross sectional view showing a tube material used to manufacture an electrode tube according to yet another embodiment of the invention;
Fig. 5 is a cross sectional view showing a tube material used to manufacture an electrode tube according to a still further embodiment of the invention;
Fig. 6 is a cross sectional view showing a tube material used to manufacture an electrode tube according to a still further embodiment of the invention;
Fig. 7 is a cross sectional view showing a tube material changed by drawing the tube material shown in Fig. 6 through dice having a normal circular hole;
Fig. 8 is a cross sectional view showing how an undesired core forms during electrical discharge machining in a prior art electrode tube;
Fig. 9 is a cross sectional view showing an example of a prior art electrode tube having a plurality of through holes;
Fig. 10 is a cross sectional view showing another example of a prior art electrode tube having a plurality of through holes; and
Fig. 11 is a cross sectional view yet another example of a prior art electrode tube having a plurality of through holes.

### Detailed Description of the Invention

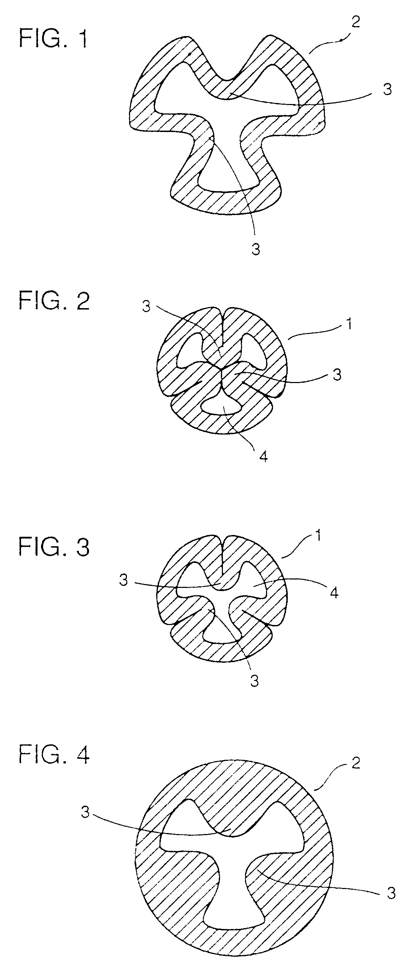

Copper or copper alloy is most preferably used as a well conductive metal forming an electrode tube for electrical discharge machining according to the present invention. One method of forming rail like portions integrally with a tubular body toward the central axis of the tubular body is for example to draw a metal tube through shape dice to produce a tube material 2 having a cross section including rail like portions 3 as illustrated in Fig. 1. Conducting drawing working to metal tube 2 having such a cross section as shown in Fig. 1 provides an electrode tube 1 as shown in Fig. 2. In electrode tube 1 in Fig. 2, a plurality of rail like portions 3 are in contact with each other along the central axis of electrode tube 1, and the space in electrode tube 1 is divided into a plurality of through holes 4 by these rail like portions 3. Note that the number of through holes 4 is of course not limited to three, and an arbitrary number suitable for desired discharge machining conditions can be selected.

The plurality of rail like portion 3 do not have to be exactly in contact with each other, but need only be close enough to each other such that an undesired core does not form along central axis during discharge machining. More specifically, the plurality of through holes 4 do not have to be discretely separated from each other, and it is substantially possible to avoid an undesired core from forming during the machining even if the plurality of through holes communicate through a narrow space along the central axis as shown in Fig. 3.

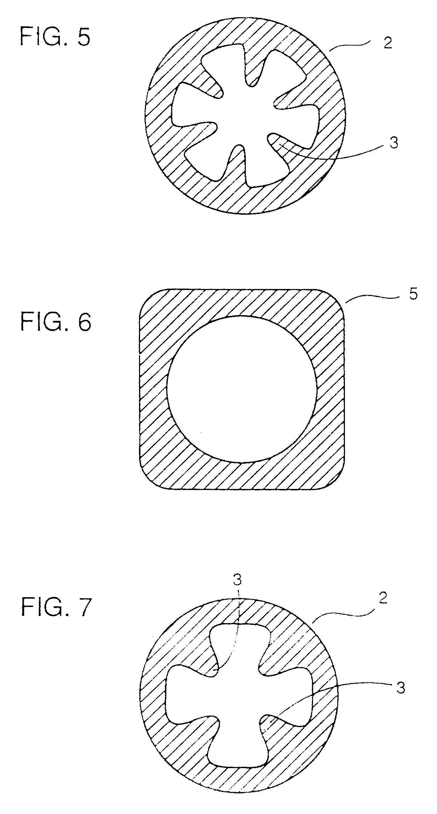

A shape metal tube material for forming an electrode tube according to the present invention can be provided by hot extrusion, cold rolling, or drawing. By applying these working processes, for example, metal shape tubes as shown in Figs. 4 to 6 can be formed. Shape tubes 2 as illustrated in Figs. 4 and 5 include a plurality of raised portions 3 toward the central axis. Shape tube 5 shown in Fig. 6 has a substantially square outer shape and a circular inner shape. An electrode tube having the space inside the tube divided into a plurality of through holes can be manufactured by drawing such a shape tube a number of times. Fig. 7 illustrates an example in which tube material 5 shown in Fig. 6 is drawn through dice to have a circular outer shape, and changed into tube material 2 having four raised rail like portions 3.

For the shape tube, a tube having a circular inner shape and an outer shape including a plurality of raised portions in a direction away from the central axis, or a shape tube having an elliptical outer shape may be used, besides the above. More specifically, a tube material having a wall thickness significantly changing periodically along the circumferential direction is subjected to drawing through die having a circular hole, the mass of a thick wall portion is shifted toward the central axis of the tube, and rail like portions projecting toward the central axis can be formed in the tube.

### DESCRIPTION OF THE PREFERRED EMBODIMENTS

A tube material of copper deoxidized by phosphorus having an outer diameter of 6.0mm and a thickness of 0.5mm is drawn into an outer diameter of 1.8mm, then continues to be drawn with shape dice, and a shape tube having a cross section as shown in Fig. 1 is formed and coiled. The shape tube taken out from the coil is drawn through dice having a normal circular hole, continues to be repeatedly drawn into the size of outer diameter of 0.8mm, and an electrode tube having a cross section as shown in Fig. 2 is wound in a coil. An electrode tube having a length of 300mm is cut out from thus manufactured coil of electrode tube, straightened and used for an electrode for electrical discharge machining to form small holes in cemented carbide parts. As a result, it was confirmed that with the discharge electrode tube of this embodiment, an undesired core 7 as shown in Fig. 8 does not form and highly precise small holes can be formed.

### The Effect of the Invention

As in the foregoing, according to the present invention, the space inside the electrode tube is substantially divided into a plurality of through holes by rail like portions raised toward the central axis, and therefore, an undesired core does not form during electrical discharge machining. In the electrode tube according to the present invention, insertion of a partitioning member in the tube material as practiced conventionally is not necessary, the rail like portions can be formed by continuously plastic-working the tube material, and a long electrode tube which can be wound in a coil can be efficiently manufactured.

Although the present invention has been described and illustrated in detail, it is clearly understood that the same is by way of illustration and example only and is not to be taken by way of limitation, the scope of the present invention being limited only by the terms of the appended claims.

## Claims

1. An electrode tube for electrical discharge machining (1), comprising:
an outer peripheral portion (2) having a substantially circular outer shape in a cross section taken perpendicularly to said central axis;
a plurality of rail like portions (3) projecting from said peripheral portion (2) toward a central axis of said tube (1),
said rail like portions (3) being formed integrally with said outer peripheral portion (2) the space inside said tube (1) being divided into a plurality of through holes (4) along said central axis by said plurality of rail like portions (3).

2. The electrode tube for electrical discharge machining as recited in claims 1, wherein said plurality of rail like portions (3) are in contact with each other along said central axis.

3. The electrode tube for electrical discharge machining as recited in claim 1, wherein said electrode tube (1) is formed of a material selected from the group consisting of copper and copper alloys.

4. A method of manufacturing an electrode tube for electrical discharge machining, comprising the steps of: forming a shape tube (2, 5) by one working process selected from the group consisting of hot extrusion, cold rolling and drawing, said shape tube (2, 5) has a wall having a changing thickness in a cross section taken perpendicularly to the central axis, and
drawing said shape tube (2, 5) a plurality of times through dice having a normal circular hole, thereby forming said electrode tube having a plurality of through holes (4) substantially divided by a plurality of rail like portions (3) projecting from the outer peripheral portion (2) toward said central axis in a cross sectional taken perpendicularly to the central axis.

5. The method of manufacturing an electrode tube for electrical discharge machining as recited in claim 4,
wherein
said wall includes a plurality of projecting portions (3) curved toward said central axis.

6. The method of manufacturing am electrode tube for electrical discharge machining as recited in claim 4, wherein said wall includes a portion (3) projecting toward said central axis.

7. The method of manufacturing an electrode tube for electrical discharge machining as recited in claim 4, wherein said wall includes on its outer surface a plurality of projecting portions away from said central axis.

8. The method of manufacturing an electrode tube for electrical discharge machining as recited in claim 4, wherein said step of drawing said shape tube (2, 5) is repeated until said plurality of rail like portions (3) are in contact with each other along said central axis.

9. The method of manufacturing an electrode tube for electrical discharge machining as recited in claim 4, wherein said electrode tube (1) is wound in a coil after said plurality of drawing workings.

## Patentansprüche

1. Rohrelektrode zum Funkenerosionsbearbeiten (1), umfassend:
einen äußeren Umfangsteil (2) mit einer im wesentlichen runden äußeren Form in einem Querschnitt, der senkrecht zur Mittelachse genommen ist;
eine Anzahl von schienenartigen Teilen (3), die von dem Umfangsteil (2) in Richtung einer Mittelachse des Rohrs (1) hervorstehen,
wobei die schienenartigen Teile (3) einstückig mit dem äußeren Umfangsteil (2) ausgebildet sind,
der Raum in dem Rohr (1) unterteilt ist in eine Anzahl von Durchgangslöchern (4) entlang der Mittelachse durch die Anzahl von schienenartigen Teilen (3).

2. Rohrelektrode zum Funkenerosionsbearbeiten nach Anspruch 1, worin die Anzahl von schienenartigen Teilen (3) in Kontakt miteinander entlang der Mittelachse steht.

3. Rohrelektrode zum Funkenerosionsbearbeiten nach Anspruch 1, worin die Rohrelektrode (1) aus einem Material gebildet ist, das aus der Gruppe bestehend aus Kupfer und Kupferlegierungen gewählt ist.

4. Verfahren zur Herstellung einer Rohrelektrode zum Funkenerosionsbearbeiten, umfassend die Schritte: Bilden eines Formrohrs (2, 5) durch einen Bearbeitungsvorgang, der aus der Gruppe gewählt ist, die Heißextrusion, Kaltwalzen und -ziehen umfaßt, wobei das Formrohr (2, 5) eine Wand mit veränderlicher Dicke in einem Querschnitt senkrecht zur Mittelachse aufweist, und
Ziehen des Formrohrs (2, 5) mehrfach durch ein Formeisen mit einem normalen runden Loch, wodurch die Rohrelektrode mit einer Anzahl von Durchgangslöchern (4) gebildet wird, die im wesentlichen unterteilt ist durch eine Anzahl von schienenartigen Teilen (3), welche von dem äußeren Umfangsteil (2) in Richtung der Mittelachse in einem Querschnitt senkrecht zur Mittelachse vorstehen.

5. Verfahren zur Herstellung einer Rohrelektrode zur Funkenerosionsbearbeitung nach Anspruch 4, worin die Wand eine Anzahl von hervorstehenden Teilen (3) umfaßt, welche in Richtung der Mittelachse gebogen sind.

6. Verfahren zur Herstellung einer Rohrelektrode zur Funkenerosionsbearbeitung nach Anspruch 4, worin die Wand einen Teil (3) umfaßt, welcher in Richtung der Mittelachse hervorsteht.

7. Verfahren zur Herstellung einer Rohrelektrode zur Funkenerosionsbearbeitung nach Anspruch 4, worin die Wand auf ihrer äußeren Oberfläche eine Anzahl von hervorstehenden Teilen weg von der Mittelachse umfaßt.

8. Verfahren zur Herstellung einer Rohrelektrode zur Funkenerosionsbearbeitung nach Anspruch 4, worin der Schritt des Ziehens des Formrohrs (2, 5) wiederholt wird, bis eine Anzahl von schienenartigen Teilen (3) gebildet ist, die in Kontakt miteinander entlang der Mittelachse stehen.

9. Verfahren zur Herstellung einer Rohrelektrode zur Funkenerosionsbearbeitung nach Anspruch 4, worin die Rohrelektrode (1) nach der vielfachen Zieharbeit in einer Spule aufgewickelt wird.

## Revendications

1. Electrode en forme de tube pour usinage par électroérosion (1) comprenant :
une portion périphérique externe (2) ayant une forme extérieure sensiblement circulaire en section transversale prise perpendiculairement à cet axe central ;
une pluralité de portions en forme de rail (3) faisant saillie à partir de la portion périphérique (2) vers un axe central du tube (1) ;
ces portions en forme de rail (3) étant solidaires de la portion périphérique extérieure (2), l'espace à l'intérieur du tube (1) étant divisé en une pluralité de trous traversants (4) le long de l'axe central par la pluralité de portions en forme de rail (3).

2. Electrode en forme de tube pour l'usinage par électroérosion selon la revendication 1, dans laquelle la pluralité de portions en forme de rail (3) sont en contact entre elles le long de cet axe central.

3. Electrode en forme de tube pour l'usinage par électroérosion selon la revendication 1, dans laquelle l'électrode en forme de tube (1) est constituée d'un matériau choisi dans le groupe consistant en alliage de cuivre et en cuivre.

4. Procédé pour la fabrication d'une électrode en forme de tube pour l'usinage par électroérosion, comprenant les étapes consistant à : former un tube (2, 5) par un procédé de traitement choisi dans le groupe constitué par l'extrusion à chaud, le laminage à froid et l'emboutissage, ce tube (2, 5) ayant une paroi avec une épaisseur variable en section transversale prise perpendiculairement à l'axe central, et emboutir ce tube (2, 5) une pluralité de fois à travers une matrice ayant un trou circulaire normal, formant ainsi le tube d'électrode avec une pluralité de trous traversants (4) sensiblement divisés par une pluralité de portions en forme de rail (3) faisant saillie à partir de la portion périphérique extérieure (2) en direction de l'axe central dans la section transversale prise perpendiculairement à l'axe central.

5. Procédé pour la fabrication d'une électrode en forme de tube pour l'usinage par électroérosion selon la revendication 4, dans lequel la paroi comprend une pluralité de portions en saillie (3) recourbées vers l'axe central.

6. Procédé pour la fabrication d'une électrode en forme de tube pour l'usinage par électroérosion selon la revendication 4, dans lequel la paroi comprend une portion (3) faisant saillie vers l'axe central.

7. Procédé pour la fabrication d'une électrode en forme de tube pour l'usinage par électroérosion selon la revendication 4, dans lequel la paroi comprend sur sa surface extérieure une pluralité de portions en saillie détournées de l'axe central.

8. Procédé pour la fabrication d'une électrode en forme de tube pour l'usinage par électroérosion selon la revendication 4, dans lequel l'étape d'emboutissage du tube (2, 5) est répétée jusqu'à ce que la pluralité de portions en forme de rail (3) se trouve en contact le long de l'axe central.

9. Procédé pour la fabrication d'une électrode en forme de tube pour l'usinage par électroérosion selon la revendication 4, dans lequel l'électrode en forme de tube (1) est enroulée en serpentin après la pluralité d'opérations d'emboutissage.
